(19) Europäisches Patentamt
European Patent Office
Office européen des brevets

(11) EP 1 355 240 A1

(12) EUROPEAN PATENT APPLICATION

(43) Date of publication:
**22.10.2003 Bulletin 2003/43**

(51) Int Cl.[7]: **G06F 17/30**

(21) Application number: **02252733.7**

(22) Date of filing: **18.04.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **BRITISH TELECOMMUNICATIONS public limited company
London EC1A 7AJ (GB)**

(72) Inventor: **The designation of the inventor has not yet been filed**

(74) Representative: **Nash, Roger William et al
BT Group Legal Services,
Intellectual Property Department,
8th Floor,
120 Holborn
London EC1N 2TE (GB)**

# (54) Data analysis method

(57) Current classification methods attempt to classify each classification value into a separate class. Consequently, a lot of effort is dedicated to distinguishing between two or more similar classification objects, meaning that supervised learning procedures are slow and produce classifiers that are excessively large. Moreover, the classifiers are often difficult to understand, and take a long time to be generated.

Embodiments of the invention are concerned with reducing the number of classification values that can be used to classify a data item. Relationships between classification values are identified on the basis of attribute values in a set of training data, and those classification values that are determined to be related to one another are subsumed into a single classification group.

An embodiment of the invention is thus concerned with identifying groups of classification values corresponding to a set of data, where each data item in the set is characterised by a plurality of attributes, and each attribute has one of a plurality of attribute values associated therewith. The method comprises the steps of:

(i) selecting an attribute;
(ii) identifying, on the basis of the distribution of attribute values, two classification values that are least similar to one another and allocating a first identified classification value to a first group and a second identified classification value to a second group;
(iii) allocating each unidentified classification value to one of the groups in dependence on correlation between the unidentified classification value and the first and second identified classification values;
(iv) evaluating an association between the first and second groups and the selected attribute;
(v) repeating steps (i) to (iv) for each of at least some of the plurality of attributes
(vi) comparing associations evaluated at step (iv) and selecting first and second groups corresponding to the weakest association;
(vii) for each of the first and second groups repeating steps (i) to (vi) for the classification values therein, until the association evaluated at step (iv) falls below a predetermined threshold value.

Essentially classification groups are repeatedly analysed with respect to a range of attributes so as to identify all possible groupings of classification values. For example, classification values *Daily Mail, Daily Express, The Times, The Guardian, Vogue, New Scientist, Economist, Cosmopolitan, FHM, House and* Garden are analysed with respect to a selection of attributes (e.g. sex, age, occupation etc.). Assuming that the analysis identifies the classification values as falling within two classification groups: *[Daily Mail, Daily Express, Cosmopolitan, FHM]* and *[The Times, The Guardian, Vogue, New Scientist, Economist, House and Garden],* each of these groups is then analysed with respect to the same, or a different, selection of attributes. This second round of analysis may identify further clusters of classification values - e.g. the analysis could show that the classification values in the latter group are clustered into two distinct groups: [*House and Garden, Vogue*] and [*The Times, The Guardian, New Scientist, Economist*]. After each round of analysis an association between the groups and attributes is measured and is compared with a threshold; this comparison identifies whether or not the groups are sufficiently different as to justify splitting up the classification values into groups.

EP 1 355 240 A1

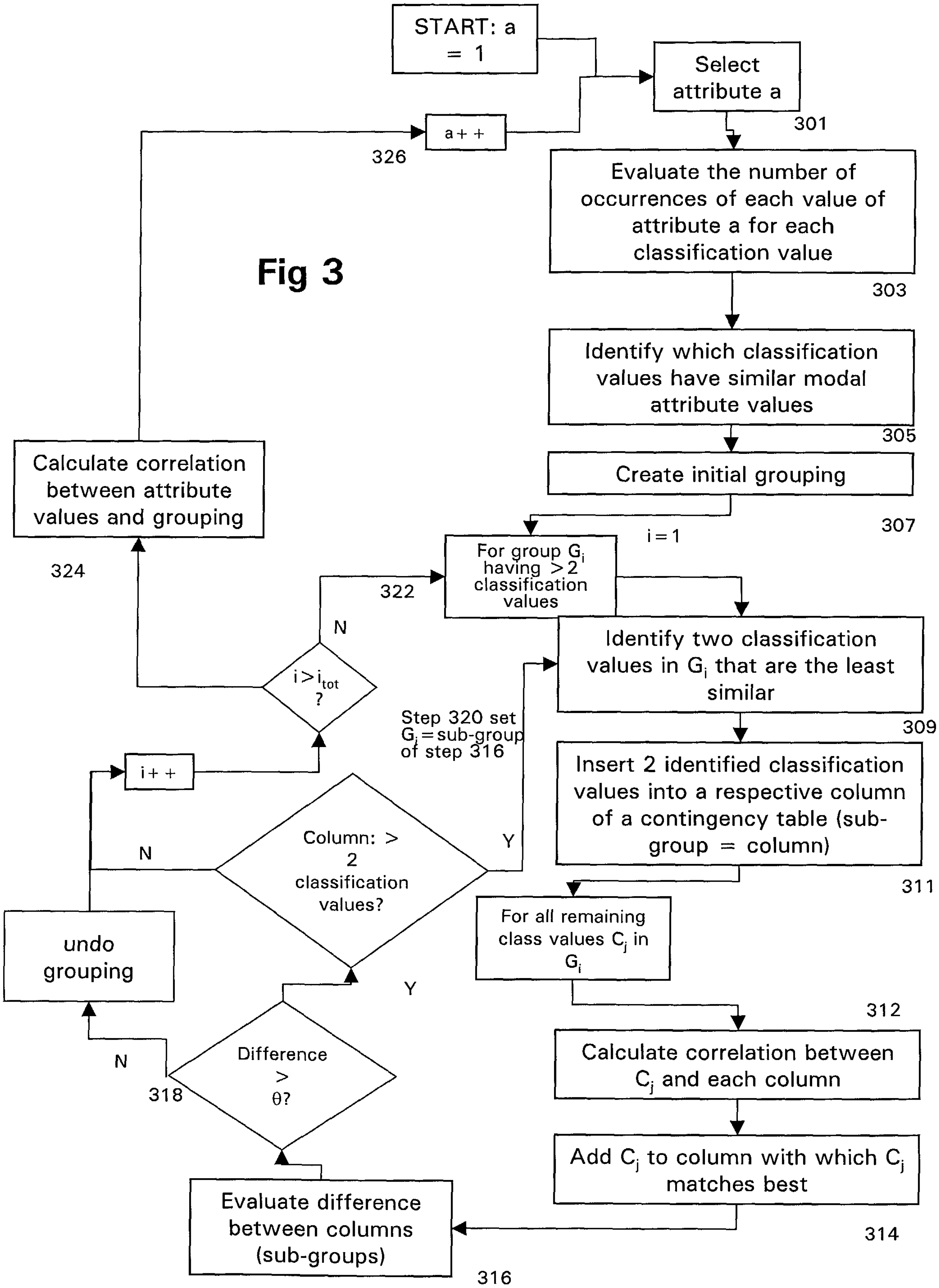
START: a = 1
Select attribute a
301
a++
326
Evaluate the number of occurrences of each value of attribute a for each classification value
303
Identify which classification values have similar modal attribute values
305
Create initial grouping
307
i=1
For group $G_i$ having >2 classification values
322
Identify two classification values in $G_i$ that are the least similar
309
Insert 2 identified classification values into a respective column of a contingency table (sub-group = column)
311
For all remaining class values $C_j$ in $G_i$
312
Calculate correlation between $C_j$ and each column
Add $C_j$ to column with which $C_j$ matches best
314
Evaluate difference between columns (sub-groups)
316
Difference > θ?
318
N
Y
undo grouping
Column: > 2 classification values?
N
Y
Step 320 set $G_i$=sub-group of step 316
i++
$i>i_{tot}$ ?
N
Calculate correlation between attribute values and grouping
324

Fig 3

## Description

The present invention is concerned with a data analysis method, and is suitable particularly, but not exclusively to identify groups of related classification values

Many organisations use databases as part of their normal operations for data storage and retrieval. As a result, enormous amounts of data are generated, collected and stored in a database. These data contain the experiences of the workforce and are essentially the heartbeat of an organisation. Many organisations would want to understand the data and gather knowledge that would be useful so that they could improve their business operations. Unfortunately the data are too large and it is impossible to analyse the data manually. One primary task of machine learning programs is to process the data and generate an output model, which is used for prediction and knowledge presentation found in the data.

A typical data set can be viewed as a fixed-size table with rows and columns, where each row is a record in the data and each row has many columns, where each column is an attribute of the data. For example questionnaires from a household census can be converted into data that is stored in a database where each row represents an entry of a questionnaire and each column or attribute is a question asked in the questionnaire. Each attribute can take on a set of values. There are basically two types of values: categorical or numeric. Categorical attributes (also known as nominal or symbolic attributes) contain values that have no inherent order, for example *type of car* that can assume values like saloon, estate, hatchback, etc. Numeric attributes (also known as continuous attributes) contain values that have some kind of order, for example the attribute *age* can assume any value from 1 to 100. The present invention is concerned with categorical or categorised numerical attributes.

In most practical applications, there is a target object of interest. This object is an attribute found in the data set, whose values are to be predicted when given the values of the other attributes. This target object is also referred to as a *class,* and each value that this class can take is also termed as a *classification value.* For example in a data set that contains the attributes gender, education level, income, and the type of car this person drives, when given the values of the first three attributes, the value of the last attribute is to be predicted. In practice this target attribute can be any attribute found in the data set, and it depends on the hypothesis that the user has set.

The problem of classifying examples into one of a discrete set of possible classification values is often referred to as a *classification problem.* A computer program that learns from a set of data (training examples) is also referred to as a *supervised learning procedure,* with the class as the *teacher.* The program will generate an output model, also termed a classifier. A test case for the classifier is a record with all the values of the attributes, except the class. These values are fed into a classifier, which then returns a value of the class as the prediction result. In order to evaluate the performance of a classifier, a data set of known classification values are used, and the results are matched with the actual classification values. These classifiers can also be used as a tool to describe the knowledge found in the data set.

It is extremely common for real world data sets to contain many classification values, and some of these values may have similar characteristics. For example, in a household survey data set we would like to find out who reads particular kinds of newspapers, for example, *Daily Mail, Daily Express, The Times, The Guardian.* The *Daily Mail* and *Daily Express* have similar characteristics in their contents that can be expected to appeal to certain types of readers, and they are generally categorised as tabloids, while *The Times* and *The Guardian* have similar characteristics and are categorised as broadsheets. Since characteristics of the Daily Mail and Daily Express are generally similar, it would be difficult for the program to classify the papers independently of one another.

Current classification methods attempt to classify each of these newspapers into a separate class. Consequently, a lot of effort is dedicated to distinguishing between two or more similar classification objects, meaning that supervised learning procedures are slow and produce classifiers that are excessively large. Moreover, the classifiers are often difficult to understand, and take a long time to be generated.

One method, known as "Classification value grouping procedures", attempts to avoid these problems by partitioning classification values into groups, each of which becomes the classification target. One particular classification grouping procedure, which is described in Hastie, T., & Tibshirani, R., (1998), "Classification by pairwise coupling" In *The Annals of Statistics,* 26(2), 451-471, reduces the complexity of a classification problem by separating it into multiple binary classification problems (i.e. problems that distinguish only between two classes). This method adopts the most primitive technique of partitioning the set of classification values into two classification groups, in which one contains one classification value and the other contains all the other classification values. For example, if a data set has $n$ classification values, $C_1, C_2, ..., C_n$, then there are $n$ binary classification problems. Each problem has classification groups: $G_i$ and $G_j$, where $G_i$ contains one classification value and $G_j$ contains a grouping of all classes except $G_i$. In other words, $G_j$ is a disjunction of ($n$-1) classification values. The procedures then construct one classifier for each set of classification groups, meaning that there are $n$ classifiers. However, for large classification problems, where the set of classification values is large, this procedure would take a long time, and is thus not practical for real-world problems.

The present invention is a novel classification value grouping procedure, which ameliorates the problems associated with known methods.

According to a first aspect of the present invention there is provided a method of identifying groups of classification values corresponding to a set of data, each data item in the set being characterised by a plurality of attributes, each attribute having one of a plurality of attribute values associated therewith. The method comprises the steps of:

(i) selecting an attribute;
(ii) identifying, on the basis of the distribution of attribute values corresponding to the selected attribute, two classification values that are least similar to one another and allocating a first identified classification value to a first group and a second identified classification value to a second group;
(iii) allocating each unidentified classification value to one of the groups in dependence on correlation between the unidentified classification value and the first and second identified classification values;
(iv) evaluating an association between the first and second groups and the selected attribute;
(v) repeating steps (i) to (iv) for each of at least some of the plurality of attributes
(vi) comparing associations evaluated at step (iv) and selecting first and second groups corresponding to the weakest association;
(vii) for each of the first and second groups repeating steps (i) to (vi) for the classification values therein, until the association evaluated at step (iv) falls below a predetermined threshold value.

Preferably the method includes a further step of forming, on the basis of the distribution of attribute values, initial groups of classification values, and, for each of the initial groups, applying steps (i) - (vii) thereto. These initial groups may be formed by identifying, for each classification value, an attribute value for which the number of data items is highest, and grouping together classification values whose highest number of data items is in respect of the same attribute value.

Conveniently the evaluating step (iv) comprises identifying that an apparent association exists between the first and second groups and the selected attribute, if such an association is identified to exist, evaluating the strength of the association.

According to a second aspect of the invention there is provided a method of creating a decision tree classifier comprising classification groups identified by the method of the first aspect. The decision tree classifier is created by:

using the set of data, creating a first decision tree having each of the first and second groups of classification values at its leaf nodes;

for each first and second group of classification values,

identifying data items within the set of data corresponding to the respective classification values, and
creating a second decision tree having the respective classification values at its leaf nodes.

According to a third aspect of the invention there is provided a method of classifying a data item using the afore-described decision tree classifier, including the steps of:

traversing a path from a root of the first decision tree to a leaf node thereof in dependence on attribute values of the data item;
retrieving a second decision tree corresponding to the leaf node;
traversing a path from a root of the retrieved second decision tree to a leaf node thereof in dependence on attribute values of the data item; and

returning a classification value corresponding to the leaf node of the retrieved second decision tree, the classification value being representative of classification for the data item.

According to a fourth aspect there is provided a system arranged to perform the methods described above. Preferably the methods are carried out by a plurality of computer programs configured to run on one or a plurality of computers. The set of data is stored in storage such as one or more databases, and one of the computer programs is arranged to retrieve the data prior to performing the method. The computer(s) and database(s) are interconnected via one or more networks, which may be wireless or fixed.

Embodiments of the invention will now be described, by way of example only, and with reference to the accompanying figures, in which:

Figure 1 is a schematic block diagram, showing an environment within which embodiments of the invention may operate;

Figure 2 is a schematic block diagram, showing components of a first embodiment of the invention, generally referred to as a grouping engine;
Figure 3 is a flow diagram showing a classification grouping method carried out by the grouping engine shown in Figure 2;
Figures 4a and 4b are schematic diagrams showing conventional decision trees;
Figures 5a and 5b are schematic diagrams showing decision trees based on groupings identified by the grouping engine of Figure 2; and
Figure 6 is a flow diagram showing a classification process using the decision trees of Figures 5a and 5b.

**Overview of operating environment**

Referring to Figure 1, an embodiment of the invention may be run on a server computer S1, in response to control data received from application A1 running on a client terminal C1. The server and client terminals S1, C1 are interconnected by means of a network N1, which may be a local area network and/or may include other networks such as the Internet and wireless networks (not shown). One or more databases D01, D03 may also be connected to the network N1, and the server computer S1 is arranged to request and receive data from one or more databases D01, D03. Generally, applications running on the server S1 receive requests to create a classifier using data stored in one or more of the databases D01, D03. The request specifies the type of classifier to be created and which data to use when creating the classifier.

**Overview of embodiments of the invention**

Embodiments of the invention are concerned with reducing the number of classification values that can be used to classify a data item. Relationships between classification values are identified on the basis of attribute values in a set of training data, and those classification values that are determined to be related to one another are subsumed into a single classification group.
Classification groups are repeatedly analysed with respect to a range of attributes so as to identify all possible groupings of classification values. For example, classification values *Daily Mail, Daily Express, The Times, The Guardian, Vogue, New Scientist, Economist, Cosmopolitan, FHM, House and* Garden are analysed with respect to a selection of attributes (e.g. sex, age, occupation etc.). Assuming that the analysis identifies the classification values as falling within two classification groups: *[Daily Mail, Daily Express, Cosmopolitan, FHM]* and *[The Times, The Guardian, Vogue, New Scientist, Economist, House and Garden],* each of these groups is then analysed with respect to the same, or a different, selection of attributes. This second round of analysis may identify further clusters of classification values - e.g. the analysis could show that the classification values in the latter group are clustered into two distinct groups: *[House and Garden, Vogue]* and [*The Times, The Guardian, New Scientist, Economist*]. After each round of analysis an association between the groups and attributes is measured and is compared with a threshold; this comparison identifies whether or not the groups are sufficiently different as to justify splitting up the classification values into more groups.
Advantages of the embodiment include an increased speed of classification, because classification becomes a two-stage process: firstly the group to which a data item corresponds is identified, and then a classification value within that group is identified. This effectively reduces the search space, since, as soon as a group has been identified, there is no need to search within any of the classification values that are outside of that group.
The invention also yields advantages in building and understanding a classifier: for the case of a decision tree classifier, the number of leaf nodes in the tree can be reduced, as leaf nodes become classification groups; for the case of neuro-fuzzy classifiers, the rule-base could be reduced in size; and for neural networks, both the number of hidden units therein could be reduced and the output units thereof could be trained much faster. These advantages are discussed later in the description, in the section "Use of classification groupings".

**First embodiment**

Referring now to Figure 2, the server computer S1 comprises a central processing unit (CPU) 201, a memory unit 203, an input/output device 205 for connecting the server computer to the network N1; storage 207, and a suite of operating system programs 209, which control and co-ordinate low level operation of the server computer S1.
Generally an embodiment of the invention is referred to as a grouping engine 200, and comprises at least some of programs 211, 213, 215. These programs, which are described in more detail below, are stored on storage 207 and are processable by the CPU 201. The grouping engine 200 has access to the databases D01, D03, which store data that are to be used to build a classifier. It is understood that each of the programs 211, 213, 215 could comprise a suite of computer programs, and is preferably written in an object-oriented programming language, such as Java™.

The programs include a program 211 for analysing the data in order to identify, for each classification value, a frequency of occurrence of attribute values corresponding thereto. The analysing program 211 is then operable to form initial groups based on the identified frequency counts. The programs additionally include a program 213 for performing a binary splitting procedure on a group, in order to determine whether the classification values in the group are sufficiently different to warrant forming two or more sub-groups thereof, and a program 215 for controlling the binary splitting program 213 in accordance with predetermined grouping criteria. These programs 211, 213, 215 interoperate as described below with reference to Figure 3.

At step 301 the analysing program 211 selects an attribute in the data and, for each value thereof, evaluates 303 a number of occurrences of each classification value in the data. The skilled person will appreciate that this can be done in many ways, however, in one approach, this involves firstly creating a so-called contingency table [described in "Principles of Statistics" by M. G. Bulmer, published by Dover, NY, second edition, 1979.] comprising M rows and N columns, where M is the number of values for the attribute selected at step 301 and N is the number of classification values. The value in a cell of the table, $n_{ij}$, formed by each row and column, is the count data classified on these two scales. Thus for an attribute having a set of values $V_1$, $V_2$, ..., $V_M$ and a class having classification values $C_1$, $C_2$, ..., $C_N$ the following table is created (Left hand side is generic representation, right hand side is an example for M = 3, N = 6)

| | $C_1$ | ... | $C_N$ |
|---|---|---|---|
| $V_1$ | $n_{11}$ | ... | $n_{1N}$ |
| : | : | : | : |
| $V_M$ | $n_{M1}$ | ... | $n_{MN}$ |
| *Totals* | $T_{C1}$ | ... | $T_{CN}$ |

Table 1

| | $C_1$ | $C_2$ | $C_3$ | $C_4$ | $C_5$ | $C_6$ |
|---|---|---|---|---|---|---|
| $V_1$ | 10 | **70** | 12 | 6 | **75** | 15 |
| $V_2$ | 15 | 5 | 14 | **70** | 5 | 30 |
| $V_3$ | **75** | 5 | **70** | 24 | 10 | **45** |
| *Totals* | 100 | 80 | 96 | 100 | 90 | 90 |

Table 2

Referring to Table 2, for a column $C_i$, the attribute value that has the highest frequency count with respect to that class, $C_i$, is known as the *modal attribute value,* and identified as such by the analysing program 211. For example in Table 2, in column $C_1$, $C_1V_1$ has frequency count of 10, $C_1V_2$ has 15 and $C_1V_3$ has 75. Therefore, the analysing program 211 identifies $V_3$ as being the modal attribute value for $C_1$ since $C_1V_3$ has the highest frequency count for that column.

For each attribute value, the analysing program 211 then identifies 305 which of the classification values have similar modal attribute values - for example, in Table 2, attribute value $V_3$ is the modal attribute value of classification values $C_1$, $C_3$ and $C_6$ and attribute value $V_1$ is the modal attribute value of classification values $C_2$ and $C_5$. As classification value $C_4$ does not share modal attribute values with any other of the classification values, it is not identified as being similar to any of the other classification values. Thus at step 307, the analysing program 211 creates an initial grouping with three groups: $G_1 = C_1,C_3,C_6$; $G_2 = C_2,C_5$ and $G_3 = C_4$, and adds the attribute value/classification value frequency counts together, as shown in Table 3:

Table 3

| | $C_1,C_3,C_6$ | $C_2,C_5$ | $C_4$ |
|---|---|---|---|
| $V_1$ | 37 | 145 | 6 |
| $V_2$ | 59 | 10 | 70 |
| $V_3$ | 190 | 15 | 24 |
| *Totals* | 286 | 170 | 100 |

Essentially, therefore, the analysing program 211 creates an initial grouping by merging classification values together on the basis of the correlation between modal attribute values. The analysing program 211 is not essential to the invention - it a preferred feature that speeds up identification of classification value groups. If the analysing program 211 were not used, the binary splitting program 213 would, in the first instance, operate on a single group comprising all of the classification values, and then proceed as described below in respect of that single group.

These initial groups $G_1$, $G_2$ and $G_3$ are then passed to the binary splitting program 213, which, for each group in turn, can split the group into two sub-groups, each comprising one or more of the classification values in that group. Clearly the binary splitting program 213 only operates on groups comprising two or more classification values therein, so that, in the present example, group $G_3$ is ignored. This procedure is described for the example of group $G_1$:

The splitting program 213 evaluates the correlation between the classification values in the group (here $C_1$, $C_3$, $C_6$), on the basis of the attribute frequency count data, in order to identify 309 two classification values that correlate the least, i.e. that are the least similar. The correlation can be evaluated by applying a $\chi^2$ (chi-square) test and computing Cramer's V (see Appendix 1) to the attribute frequency count data.

The splitting program 213 creates a second contingency table, shown as Table $T_{out}$ below, which comprises two columns, each of which pertains to one of the classification values identified at step 309 and represents a sub-group of the subject initial group (the term "sub-group" is used to describe a sub-set of a group; if a sub-group is identified to be sufficiently different to warrant clustering independently of other sub-groups, it is classified a group. Thus the term sub-group is merely used to clarify the description of, and distinction between, a group and a sub-set thereof).

For the example of group $G_1$, classification values $C_1$ and $C_6$ are identified as being the least similar, so that after step 310, table $T_{out}$ has the following entries:

| | $C_1$ | $C_6$ |
|---|---|---|
| $V_1$ | *10* | *15* |
| $V_2$ | *15* | *30* |
| $V_3$ | *75* | *45* |
| *Totals* | *100* | *90* |

$T_{out}$ - after step 310

The remaining classification values in the initial group (in this example only $C_3$) are then added to one of the columns of $T_{out}$ in dependence on the correlation between the remaining, or candidate, classification value, $C_3$, and the classification value in the column. Accordingly, at step 312, the splitting program 213 computes a correlation between each column classification value and candidate classification value (e.g. applying a $\chi^2$ (chi-square) test and computing Cramer's V (see Appendix 1)), and adds 314 the candidate classification value to whichever of the column classification values correlates best with the candidate classification value. In the example, $C_3$ correlates better with $C_1$ than with $C_6$, so at step 314 $C_3$ is merged into the column corresponding to $C_1$ to form the final version of $T_{out}$:

| | $C_1+C_3$ | $C_6$ |
|---|---|---|
| $V_1$ | *22* | *15* |
| $V_2$ | *29* | *30* |
| $V_3$ | *145* | *45* |
| *Totals* | *196* | *90* |

$T_{out}$ - after step 314

The splitting program 213 then evaluates the sub-groups - ($C_1$ and $C_3$) and ($C_6$) - so as to determine whether or not splitting the grouping of $C_1$ $C_3$ $C_6$ is worthwhile. In one arrangement, this involves evaluating 316 the association between the groups and attribute a1, using the afore-mentioned functions $\chi^2$ (so-called "chi-square" test, described in more detail in Appendix A1) and Cramer's V, which are statistically sound techniques that are widely used to measure significance and strength of association between entities. The $\chi^2$ test (Appendix A1) establishes that an apparent association exists between the entities (grouping and attribute), while Cramer's V (Equation 1) determines if the association is strong enough to be of any interest.

These tests establish whether or not a classification group can be predicted from given attribute values; if there is an association between the attribute and the grouping then it is assumed that such a prediction is possible. Indirectly it can also be assumed that if a classification group can be predicted from an attribute value then the classification groups are distinct from one another. These tests are described in more detail in "Principles of Statistics" by M. G. Bulmer, referred to above.

The $\chi^2$ test that is used is set out in Appendix A1, and Cramer's V (Cv) measure is calculated from the following expression:

Equation 1: $$C_v = \sqrt{\frac{X^2}{N(L\text{-}1)}}$$

where $N$ is the total attribute frequency count corresponding to the classification value (sample size - referring to Table $T_{out}$ - after step 314: 196 + 90) and $L$ is the smaller dimension of the associated contingency table (here either number of attribute values ($V_{1j}$) or number of sub-groups). In this arrangement $\chi^2$ and Cramer's V each represent a difference function referred to herein as respectively δ1, δ2,
where δ1 = Probability based on $\chi^2$ (Appendix A1) and δ2 = Cv (Equation 1). The skilled person will appreciate that other measures could be used, and a list of such measures is given in Appendix A2.

The splitting program 213 firstly evaluates δ1 and compares this with a threshold value, θ1, which is predetermined. If δ1 < θ1 the splitting program 213 proceeds to evaluate δ2, and then compares δ2 with θ2 (also predetermined). If δ2 > θ2 the splitting program 213 designates 320 the columns as accepted groups, here ($C_1$ $C_3$) and ($C_6$), and repeats steps 309 - 316 for classification values in each of the accepted groups. Clearly in the present example this can only be performed for ($C_1$ $C_3$) because this is the only group that comprises more than one classification value. If either δ1 > θ1 or δ2 < θ2 the splitting program 213 discards 318 the sub-groups and returns group $C_1$ $C_3$ $C_6$ to the controlling program 215.

Steps 309 - 320 are then repeated 322 for the other groups in the grouping that comprise two or more classification values, which, in the present example, is only group $G_2$.

Once the splitting program 213 has identified all possible groups for the attribute selected at step 301 (here a1), the splitting program 213 calculates 324 the association between the identified groups, which for this example are ($C_1$,$C_3$) ($C_6$) ($C_2$,$C_5$) ($C_4$), and the attribute. This grouping can be expressed in a further contingency table, Table 4:

Table 4

| | $C_1 + C_3$ | $C_6$ | $C_2 + C_5$ | $C_4$ |
|---|---|---|---|---|
| $V_1$ | 22 | 15 | 145 | 6 |
| $V_2$ | 29 | 30 | 10 | 70 |
| $V_3$ | 145 | 45 | 15 | 24 |
| *Totals* | 196 | 90 | 170 | 100 |

In one arrangement the association between groups and the attribute is again evaluated using functions $\chi^2$ and Cramer's V (where in this case variable L = 196 + 90 + 170 + 100), thus generating δ1 and δ2 for attribute a1.

The controlling program 215 then activates 326 the analysing program 211 to select another attribute, whereupon steps 301 - 324 are repeated as described above, in respect of this selected attribute.

Once these steps have been performed for some or all attributes ($a_k$), the output is K sets of groupings, each of which defines a particular split of the classification values, and has association values, δ1,δ2, corresponding thereto (evaluated in accordance with Equations (1) and (2) above).

For example, assuming that there are 3 attributes, a1, a2, a3, the groupings could be:

For a1 ($C_1$,$C_3$) ($C_6$) ($C_2$,$C_5$) ($C_4$) so that ($C_1$,$C_3$) is a group and ($C_2$,$C_5$) is a group
For a2 ($C_1$,$C_6$) ($C_3$,$C_2$,$C_5$) ($C_4$) so that ($C_1$,$C_6$) is a group and ($C_3$,$C_2$,$C_5$) is a group
For a3 ($C_1$,$C_3$) ($C_6$,$C_5$,$C_2$) ($C_4$) so that ($C_1$,$C_3$) is a group and ($C_6$,$C_2$,$C_5$) is a group

Assuming that the difference value δ2 takes a value between 0 (worst) to 1 (best), the association values (δ2) corresponding to these groupings are:

$(\delta 2)_{a1} = 0.5$
$(\delta 2)_{a2} = 0.4$
$(\delta 2)_{a3} = 0.7$

The controlling program 215 then selects 330 the grouping corresponding to the highest difference value. In the present example, the controlling program 215 would select the grouping corresponding to attribute a3 [($C_1$,$C_3$) ($C_6$, $C_2$,$C_5$) ($C_4$)], and pass this to the splitting program 213.

Then, for each attribute, the splitting program 213 splits 332 each group in this selected grouping into candidate sub-groups. This involves repeating method steps described at steps 309 - 316, in respect of the groups (here ($C_1$,$C_3$)

and ($C_6$, $C_2$,$C_5$)). Having completed this evaluation for all attributes, the splitting program 213 measures the strength of difference between the candidate sub-groups (essentially a repeat of step 324).

This process is best illustrated with reference to the present example. Each of groups ($C_1$,$C_3$) and ($C_6$,$C_2$, $C_5$) is, in turn, analysed against all attributes in accordance with steps 309 - 316. For the sake of brevity only group ($C_6$,$C_2$,$C_5$) is considered:

For a1 the grouping is ($C_6$) ($C_2$,$C_5$) so that ($C_2$,$C_5$) is a group
For a2 the grouping is ($C_6$) ($C_2$,$C_5$) so that ($C_2$,$C_5$) is a group
For a3 the grouping is ($C_6$,$C_2$,$C_5$) which is to be expected, since we have already identified that attribute a3 could not split this group further itself
$(\delta 2)_{a1} = 0.5$
$(\delta 2)_{a2} = 0.5$
$(\delta 2)_{a3} = 0.0$

The groupings corresponding to attributes a1 and a2 are identical and have equal association values. If, however, the groupings were different for several maximal association values, then each of the several could be selected and the groups therein could be split randomly. In the present case, where the groupings are identical, the controlling program 215 selects grouping ($C_6$) ($C_2$,$C_5$) and repeats steps 332 and 334 in respect of group ($C_2$,$C_5$).

Assuming that this group cannot be split any further (and assuming that ($C_1$,$C_3$) could not be split any further), the final grouping, based on analysis from all attributes is:

Table 5

| | $C_1 + C_3$ | $C_6$ | $C_2 + C_5$ | $C_4$ |
|---|---|---|---|---|
| $V_1$ | *22* | *15* | *145* | *6* |
| $V_2$ | *29* | *30* | *10* | *70* |
| $V_3$ | *145* | *45* | *15* | *24* |
| *Totals* | *196* | *90* | *170* | *100* |

**Use of classification groupings**

<u>Creating a classifier</u>

Although the grouping engine 200 identifies groups of classification values, a classifier is typically concerned with identifying a classification *value,* rather than a grouping. Thus once groups of classification values have been identified, a classifier has to be adapted to use the groupings and from thence identify a classification value.

This process is first described for decision tree-type classifiers. Decision tree induction programs are one of the most popular and powerful techniques for constructing classifiers using a set of training examples. Referring to Figure 4a, decision trees classify training examples by sorting them down a tree 401 from the root 403 to a leaf node 405, which provides the classification of the instance. Each node 407 in the tree specifies a test of some attribute of the example, and each branch 409 descending from that node corresponds to one of the possible values for this attribute. A test case is classified by starting at the root node 403 of the tree 401, testing the attribute specified by this node, then moving down the tree branch corresponding to the value of the attribute in the given example. This process is then repeated for the sub-tree rooted at the new node. For more information on decision trees, in particular how they are created, the reader is referred to Quinlan, J.R., "Induction of Decision Trees" in Journal *Machine Learning,* 1986, vol 1, pp 81 - 106; and Christian Borgelt: "A Decision Tree Plug-In for DataEngine", *Proc. 6th European Congress on Intelligent Techniques and Soft Computing, (EUFIT'98, Aachen, Germany),* Vol. 2, pp. 1299-1303, Verlag Mainz, Aachen, Germany 1998.

Figure 4b shows an example of a decision tree in which the classification problem is whether to play tennis based on the information about the weather. For example, the instance <*Outlook = Rain, Wind = Weak*> would be sorted down the rightmost branch of this decision tree and would therefore be classified as *yes.* Once a decision tree has been constructed, it can be easily converted into an equivalent set of if-then rules. To generate rules, each path in the decision tree is traced, from root node to leaf node, recording the test outcomes as antecedents (If-part of the rule) and the leaf-node classification as the consequent (Then-part of the rule). For example, referring to Figure 4a, rules converted from the root node 403 to the two leftmost leaf nodes 405a, 405b are:

IF outlook = sunny AND humidity = high THEN
Play tennis = no
IF outlook = sunny AND humidity = normal THEN
Play tennis = yes

With embodiments of the present invention, instead of creating a single decision tree (as per known systems), two sets of decision trees are created, a first set of which comprises a single decision tree and a second set of which comprises multiple decision trees. The first and second sets of trees are hierarchically related in that the decision tree in the first set has, at its leaf nodes, classification groups, for each of which there is a decision tree in the second set. Each decision tree (i.e. those in either the first or second set) is preferably created in accordance with the method described by Quinlan, J.R., in "Induction of Decision Trees", Journal *Machine Learning,* 1986, vol 1, pp 81-106. The trees are created by decision tree program 217, which can be one or a suite of programs, as will be appreciated by one skilled in the art.

When creating the decision tree of the first set, hereinafter called the *base tree,* the decision tree program 217 uses all of the training examples. When creating decision trees corresponding to leaf nodes of the base tree (i.e. corresponding to a classification group), the decision tree program 217 uses only those training examples that correspond to classification values associated with the leaf node classification group.

Figure 5a shows a base tree 501 created by the decision tree program 217 for classes, $C_1, C_2, \ldots C_6$, using a training set made up of attributes, $A_1, A_2, \ldots A_n$, and $V_{i,j}$ (where $V_{i,j}$ denotes that attribute $A_i$ takes its *jth* value) when there are 6 attributes. The grouping engine 200 is assumed to have identified four classification groups, $G_1, G_2, G_3, G_4$, which are related to the classification values as shown in Table 6 (as a mapping MA). As can be seen from inspection of Table 6, $G_3$ and $G_4$ contain only one classification value, meaning that the decision tree program 217 will not produce a decision tree for these classification groups (so the second set of decision trees comprises two decision trees).

Table 6:

| Mapping MA | |
|---|---|
| Classification Value | Classification Group |
| $C_1$ | $G_1$ |
| $C_2$ | $G_2$ |
| $C_3$ | $G_1$ |
| $C_4$ | $G_4$ |
| $C_5$ | $G_2$ |
| $C_6$ | $G_3$ |

Figure 5b shows one decision tree 503 of the second set of decision trees that is created by the decision tree program 217. This decision tree 503 corresponds to classification group $G_2$. The structure of this tree is completely different from that of the base tree 501, since only a subset of training examples is used by the decision tree program 217 (i.e. for a decision tree involving classification values $C_2$, and $C_5$, the training data only involves data corresponding to these classification values). This means that selection of attributes making up a test node is influenced only by the classification values of $G_2$.

Since different data is used to create the first and second sets of decision trees, classification values that appear to be indistinguishable from one another during the classification value grouping process (here $C_2$ and $C_5$, for example), may, on the basis of training data used to create the decision trees of the second set, appear to be distinguished from one another. The example shown in Figure 5b is an example of such a case: $C_2$ and $C_5$ are distinguished on the basis of attributes a3 and a1.

When classification values within a classification group cannot be distinguished from another, the leaf node of the base tree can be replaced by the classification values corresponding to the classification group.

<u>Using the classifier</u>

Once the classifier has been created, a further program, classifying program 219, is invoked in response to requests for classification of data. Referring to Figure 6, when the classifying program 219 receives 601 a data item to classify, the classifying program 219 identifies 602 attribute values corresponding to the received data item and traverses 603 a path from the root of the base tree 501 to a leaf node in dependence on the identified attribute values. If the leaf node has a classification value, then it is immediately returned 605 as the predicted class.

However, if the leaf node is a classification group, the classifying program 219 accesses the mapping MA corresponding to the base tree, and retrieves 607 an identifier identifying a decision tree corresponding to the classification group. For example, if the data item has attribute values $V_{2,1}$, $V_{3,2}$, $V_{4,1}$, $V_{5,3}$ and $V_{6,4}$ the classifying program 219 arrives at leaf node $G_2$. When the classifying program 219 accesses the mapping MA it retrieves an identifier for group $G_2$ and retrieves 609 a decision tree corresponding thereto. If there is no identifier, then a disjunction of classification values is returned at step 607 (meaning that the classification values relating thereto are not distinguished from one another). Assuming there to be an identifier, the classifying program 219 then traverses 611 down the retrieved decision tree in dependence on the attribute values.

When the classification program 219 reaches a leaf node of the retrieved decision tree, it retrieves and returns 613 the classification value corresponding thereto. For the example herein the classifying program 219 reaches leaf node $C_5$ at step 611 and returns this classification value at step 613.

In addition to predicting new data items, the decision trees created by the decision tree program 217 can be used to create an easy-to-interpret model that can be used for explanation of the problem. An example an easy-to-interpret model is a set of rules, which represent the textual form of the trees. For each decision tree in both the first set and the second set of trees, the decision program 217 converts each branch from the root to a leaf node into an if-then statement. The decision tree program 217 forms separate rules for the base tree of the first set and decision trees of the second set, even when the leaf node of the base tree is a classification group, because, as stated above, the decision tree program 217 uses a subset of training examples, whose classification values belong to the classification groups, to construct decision trees in the second set. A portion of the decision rules for the example in Figures 5a and 5b is as follows:

*if* Attribute value of Attribute $V_5$ is $V_{5,1}$
*then*
$G_3$ ($C_1$)

*if* Attribute value of Attribute $V_5$ is $V_{5,2}$
and
Attribute value of Attribute $V_2$ is $V_{2,1}$
and
Attribute value of Attribute $V_3$ is $V_{3,1}$
*then*
$G_2$ ($C_2$ or $C_5$)

*if* Attribute value of Attribute $V_5$ is $V_{5,2}$
and
Attribute value of Attribute $V_2$ is $V_{2,1}$
and
Attribute value of Attribute $V_3$ is $V_{3,2}$
*then*
$G_1$ ($C_1$ or $C_3$)

if Attribute value of Attribute $V_2$ is $V_{2,1}$ and
Attribute value of Attribute $V_3$ is $V_{3,1}$ *then*
$C_2$

*if* Attribute value of Attribute $V_2$ is $V_{2,1}$ and
Attribute value of Attribute $V_3$ is $V_{3,2}$ *then*
$C_5$

The consequent in a rule can either be a classification group, $G_i$, or a set of classification values (text shown in brackets in the rule consequents). When a classification group contains a long list of classification values, a description of the classification group could be used since a shorter sentence is easier to understand. A legend, or similar, could be used to expand on the actual classification values that correspond to the description.

The advantage of this representation is that, as the values $V_{i,j}$ and the classification values are typically meaningful phrases that can be easily understood, the classifier can be used by a user having a minimal level of expertise.

Application to other classifiers

The groupings identified by the grouping engine 200 could be used by other classifiers, such as Neuro-fuzzy and Neural Network systems.

Neuro-fuzzy systems (or any other rule-based approach, fuzzy or not) comprise rules, which define a model. The classification groups, as well as, or instead of, classification values, could form the basis of the rules. This would generate a smaller rule base and improve the pruning result after training; in other words, it would allow a pruning algorithm to actually delete some variables from the if-part of rules without losing accuracy in the classification (A suitable algorithm for identifying fuzzy rules, for example, the NEFCLASS fuzzy rule-learning algorithm, is described in "Obtaining Interpretable Fuzzy Classification Rules from Medical Data", Detlef Nauck and Rudolf Kruse, Artificial Intelligence in Medicine, 16:149-169, 1999).

Neural Networks comprise layers, which interoperate to classify a data item. The classification groups could form output units, meaning that a neural network could have fewer hidden units and output units. This means that the neural network could be trained faster and its pruning process could be improved.

**Second embodiment**

In a second embodiment of the grouping engine 200, the analysing program 211 is not used, and all of the classification values are input to the binary splitting program 213. Thus steps 301 - 307 of Figure 3 are not carried out.

For each attribute, steps 309 - 316 are then carried out for all classification values, so that, for each attribute, the output of step 316 is two groups, each comprising one or more classification values. Instead of repeating the binary splitting procedure on each of these output groups (as described in the first embodiment at step 322), for each attribute, the association between the two groups and the attribute is evaluated (essentially jumping to step 324). The association may be evaluated using the difference values $\delta 1$, $\delta 2$ described above, and the values of $\delta 2$ are then compared between the attributes.

Whichever grouping has the highest $\delta 2$ value is selected (step 330), and, for each group therein, steps 309 - 316 are carried out.

Thus in the second embodiment, for each attribute, the binary splitting program 213 only splits classification values into two groups, and the performance of these groups are compared before splitting the groups further.

**Third embodiment**

In a third embodiment of the grouping engine 200, the analysing program 211 is used to identify initial groupings, as described above at steps 301 - 307; thereafter the splitting program 213 operates as described for the second embodiment. Thus for each attribute, the initial groups identified at step 307 are only split into two groups, and the performance of these groups are compared before splitting the groups further.

As stated above, the invention may be embodied in one or more computer programs. These programs can be contained on various transmission and/or storage mediums such as a floppy disc, CD-ROM, or other optically readable medium, or magnetic tape so that the programs can be loaded onto one or more general purpose computers or could be downloaded over a computer network using a suitable transmission medium. Embodiments of the present invention are conveniently written using the Java programming language, but it is to be understood that this is inessential to the invention. These programs run on server computer S1, which runs Microsoft Windows 2000™. The skilled person would realize that the programs could run on other types of computers, such as Personal Computers, Workstations, Apple Macintosh Computers, Personal Digital Assistants, which run operating systems such as Windows™,Unix™, Linux™, Solaris™, MacOS™, PalmOS™.

*APPENDIX A1*

**Computations for evaluating Chi-squared probability**

Create a table of cell frequencies.

Compute row and column totals.

1. Compute expected cell frequencies using the formula: $E_{ij} = \frac{T_i \cdot T_j}{N}$, where $E_{ij}$ is the expected frequency for the cell in the ith row and the jth column, $T_i$ is the total number of subjects in the ith row, $T_j$ is the total number of subjects in the jth column, and $N$ is the total number of subjects in the whole table.

2. Compute Chi Square using the formula: $\chi^2 = \sum_{i=1}^{R}\sum_{j=1}^{C}\frac{(E_{ij} - n_{ij})^2}{E_{ij}}$ where $R$ is the number of rows and $C$ is the number of columns in the frequency table and $n_{ij}$ is the cell frequency value of row $i$ and column $j$.

3. Compute the degrees of freedom using the formula: df = (R-1)(C-1) where R is the number of rows and C is the number of columns.

4. Use a chi square table to look up the probability value. In the notation used in the description, the probability value is δ1

Applying this to the example of Table $T_{out}$:

| | $C_1 + C_3$ | $C_6$ | |
|---|---|---|---|
| $V_1$ | 22 (25.36) | 15 (11.64) | 37 |
| $V_2$ | 29 (40.43) | 30 (18.57) | 59 |
| $V_3$ | 145 (130.21) | 45 (59.79) | 190 |
| *Totals* | 196 | 90 | 286 |

Table $T_{out}$

$$E_{11} = \frac{37x196}{286} = 25.36 \quad E_{12} = \frac{37x90}{286} = 11.64$$

$$E_{21} = \frac{59x196}{286} = 40.43 \quad E_{22} = \frac{59x90}{286} = 18.57$$

$$E_{31} = \frac{190x196}{286} = 130.21 \quad E_{32} = \frac{190x90}{286} = 59.79$$

$$\chi^2 = \frac{(25.36-22)^2}{25.36} + \frac{(11.64-15)^2}{11.64} + \frac{(40.43-29)^2}{40.43} + \frac{(18.57-30)^2}{18.57} + \frac{(130.21-145)^2}{130.21} + \frac{(59.79-45)^2}{59.79}$$

$$= 17.02$$

Degrees of freedom of table = (3-1)(2-1) = 2
From Chi-squared table, Probability value, $\delta 1 \approx 0.001$

The threshold value, $\theta 1$, is set based on some initial experiments on freely available data sets accessible from the machine learning repository of the University of California at Irvine (UCI) at ftp://ftp.ics.uci.edu/pub/machine-learning-databases.

The data sets that were used in embodiments of the present invention are called Abalone, Audiology, Autos, Ecoli, Iris, and Primary-tumor. A program suggests default values of 0.01 for $\theta 1$ and 0.2 for $\theta 1$, but the user can change those values.

***APPENDIX A2***

The development of a classification value grouping procedure is a measure of the quality of candidate groups. Such a measure serves two essential purposes: it determines the relative merits of alternative groupings and it determines the point at which group formation through splitting ceases to be beneficial. A suitable measure should therefore indicate the similarity of members of the same group and dissimilarity of members of different groups.

The first embodiment describes using chi-squared and Cramer's V as a measure of the quality of candidate groups. Other measures, which could be used, include:

For test on the existence of an association:

Likelihood ratio; and
Linear-by-Linear association.

To measure the strength of an association:

- asymmetric measures (i.e. one dependent and one independent group needs to be specified)

  Asymmetric Lambda;
  Goodman and Kruskal's tau; and
  Uncertainty coefficient.

- symmetric measures (i.e. no direction of the association between the groups is assumed):

  Symmetric Lambda;
  Phi coefficient; and
  Contingency coefficient.

These measures are described in: Siegel, S. and Castellan, N. J. J. (1989). *Nonparametric Statistics for the Behavioral Sciences. McGrawHill*, New York, second edition.

**Claims**

1. A method of identifying groups of classification values corresponding to a set of data, each data item in the set being **characterised by** a plurality of attributes, each attribute having one of a plurality of attribute values associated therewith, the method comprising the steps of:

   (i) selecting an attribute;
   (ii) identifying, on the basis of the distribution of attribute values corresponding to the selected attribute, two classification values that are least similar to one another and allocating a first identified classification value to a first group and a second identified classification value to a second group;
   (iii) allocating each unidentified classification value to one of the groups in dependence on correlation between the unidentified classification value and the first and second identified classification values;
   (iv) evaluating an association between the first and second groups and the selected attribute;
   (v) repeating steps (i) to (iv) for each of at least some of the plurality of attributes
   (vi) comparing associations evaluated at step (iv) and selecting first and second groups corresponding to the weakest association;
   (vii) for each of the first and second groups repeating steps (i) to (vi) for the classification values therein, until the association evaluated at step (iv) falls below a predetermined threshold value.

2. A method of identifying groups of classification values corresponding to a set of data, each data item in the set being **characterised by** a plurality of attributes, each attribute having one of a plurality of attribute values associated therewith, the method comprising the steps of:

   (i) selecting an attribute;
   (ii) identifying, on the basis of the distribution of attribute values corresponding to the selected attribute, two classification values that are least similar to one another and allocating a first identified classification value to a first group and a second identified classification value to a second group;
   (iii) allocating each unidentified classification value to one of the groups in dependence on a correlation between the unidentified classification value and the first and second identified classification values;
   (iv) evaluating an association between the first and second groups and the selected attribute;
   (v) for each of the first and second groups repeating steps (i) to (iv) for the classification values therein, until the association evaluated at step (iv) falls below a predetermined threshold value.
   (v) repeating steps (i) to (v) for each of at least some of the plurality of attributes;
   (vi) comparing associations evaluated at step (iv) and selecting all first and second groups corresponding to the weakest association; and
   (vii) repeating steps (i) to (vi) for each first and second group selected at step (vi).

3. A method according to step 1 or step 2, in which step (ii) further comprises, for each value of the selected attribute, identifying a number of data items corresponding to each classification value, so that the distribution of attribute values used in said identifying step (ii) is the distribution of attribute values over classification values.

4. A method according to any one of the preceding claims including firstly forming, on the basis of the distribution of attribute values, initial groups of classification values, and, for each of the initial groups, applying steps (i) - (vii) thereto.

5. A method according to claim 4 wherein the initial groups are formed by identifying, for each classification value, an attribute value for which the number of data items is highest, and grouping together classification values whose highest number of data items is in respect of the same attribute value.

6. A method according to any one of the preceding claims, in which the evaluating step (iv) comprises identifying that an apparent association exists between the first and second groups and, if such an association is identified to exist, evaluating the strength of the association.

7. A method of creating a decision tree classifier comprising classification groups identified according to any one of the preceding claims, including the steps of:

   using the set of data, creating a first decision tree having each of the first and second groups of classification values at its leaf nodes;

for each first and second group of classification values,
identifying data items within the set of data corresponding to the respective classification values, and
creating a second decision tree having the respective classification values at its leaf nodes.

**8.** A method of classifying a data item using the decision tree classifier created according to claim 7, including the steps of:

traversing a path from a root of the first decision tree to a leaf node thereof in dependence on attribute values of the data item;
retrieving a second decision tree corresponding to the leaf node;
traversing a path from a root of the retrieved second decision tree to a leaf node thereof in dependence on attribute values of the data item; and
returning a classification value corresponding to the leaf node of the retrieved second decision tree, the classification value being representative of classification for the data item.

**9.** A system for identifying groups of classification values corresponding to a set of data, each data item in the set being **characterised by** a plurality of attributes, each attribute having one of a plurality of attribute values associated therewith, the apparatus comprising:

storage arranged to store the set of data; and
processing means arranged to carry out the steps of any one of claims 1 to 6, wherein the storage and processing means are interconnected via communication means.

**10.** A system according to claim 9, further including a terminal computer connected to the processing means, wherein the terminal computer is arranged to receive an input indicative of a request for grouping of classification values, and, in response to receipt of such an input, is arranged to invoke the processing means.

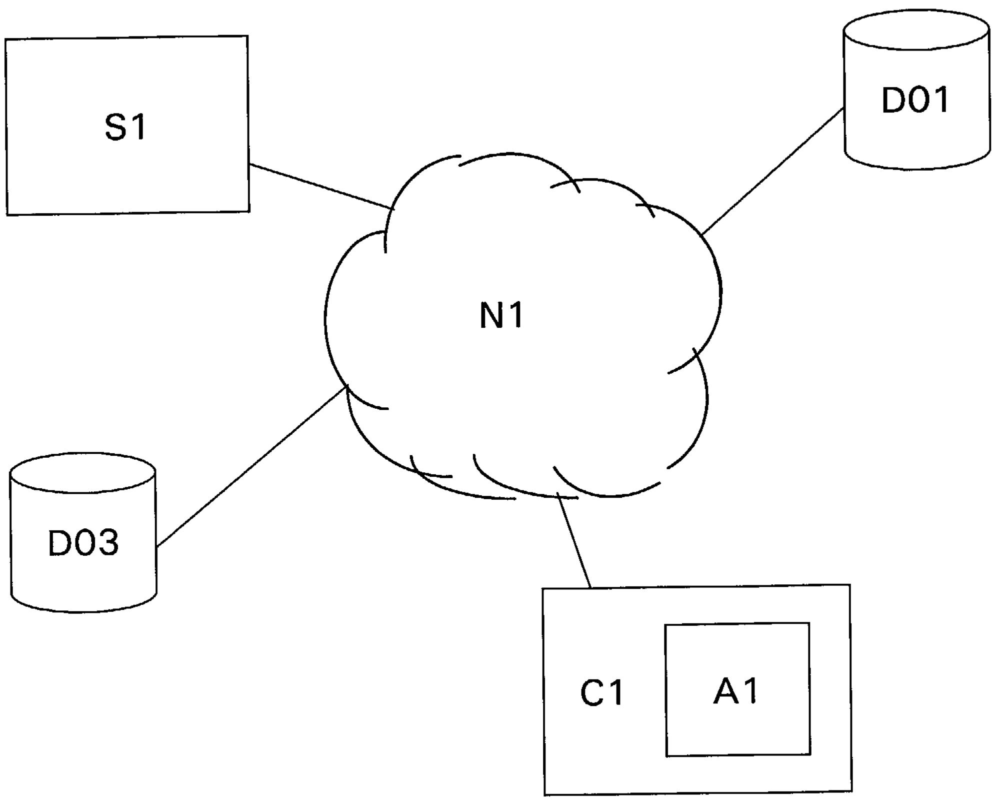


Fig 1

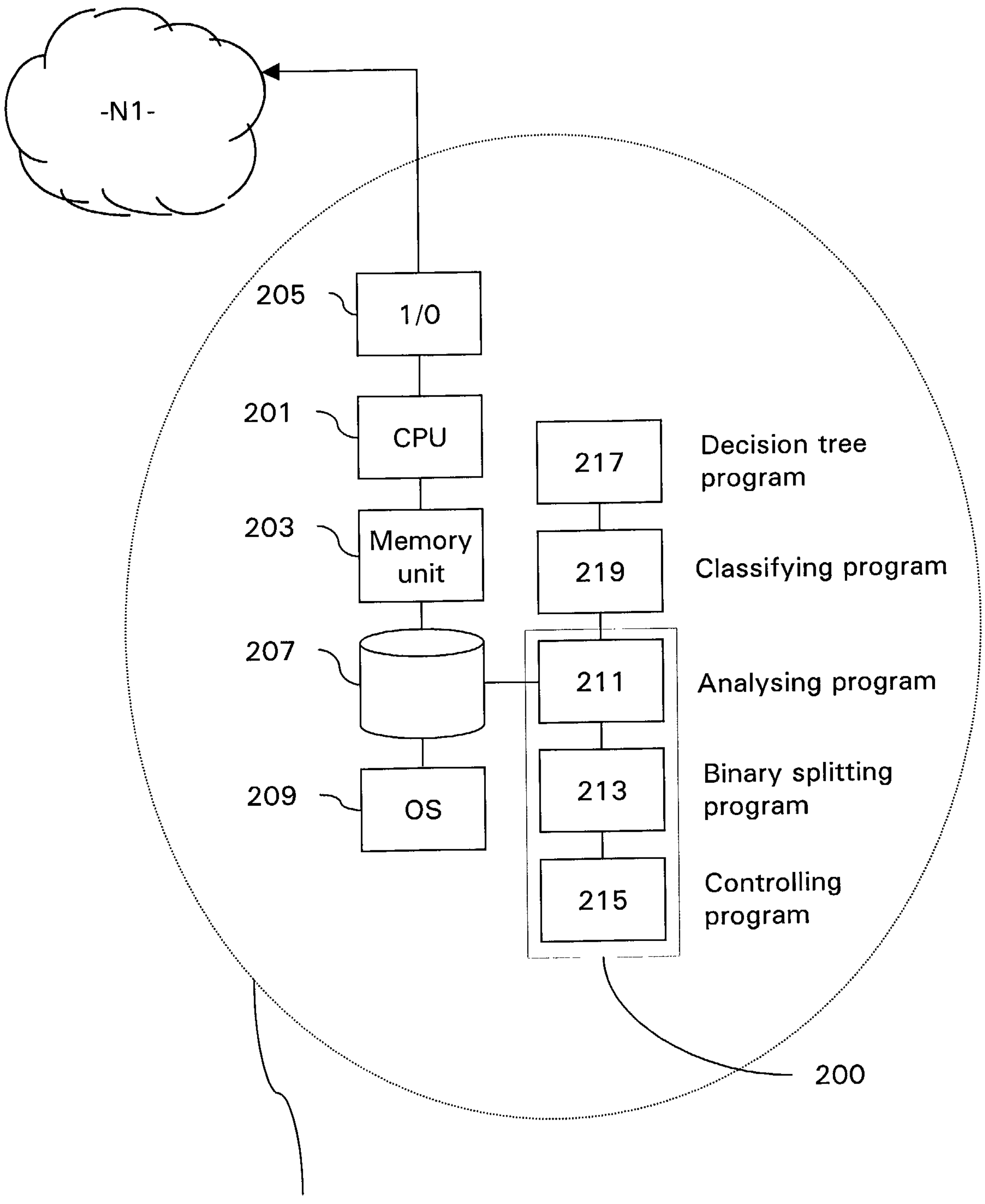
-N1-
205
1/0
201
CPU
203
Memory unit
207
209
OS
217
Decision tree program
219
Classifying program
211
Analysing program
213
Binary splitting program
215
Controlling program
200
S1

Fig 2

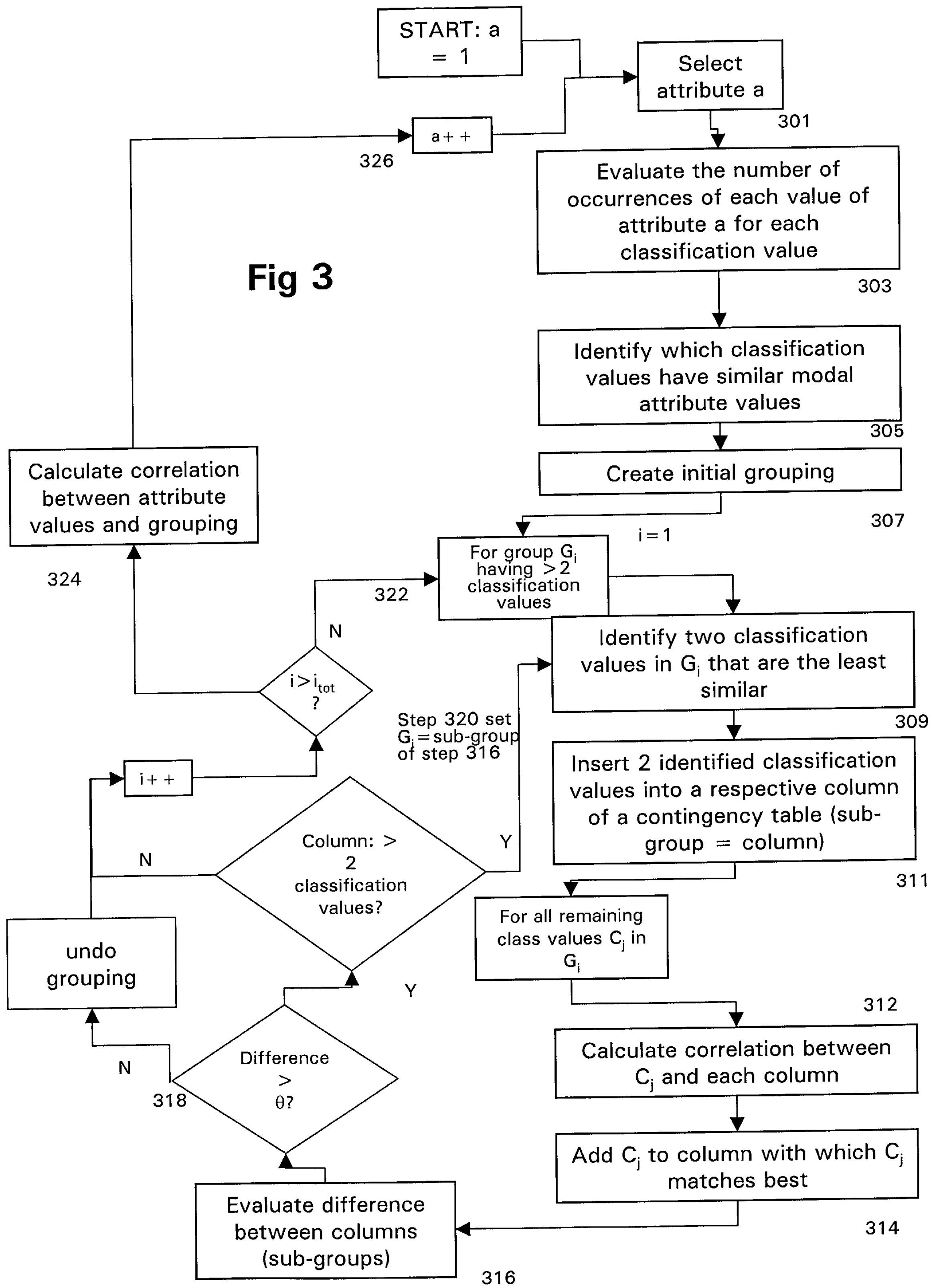
START: a = 1
Select attribute a
301
a++
326
Evaluate the number of occurrences of each value of attribute a for each classification value
303
Identify which classification values have similar modal attribute values
305
Create initial grouping
307
Calculate correlation between attribute values and grouping
324
i=1
For group $G_i$ having >2 classification values
322
N
Identify two classification values in $G_i$ that are the least similar
$i>i_{tot}$ ?
Step 320 set $G_i$ = sub-group of step 316
309
i++
Insert 2 identified classification values into a respective column of a contingency table (sub-group = column)
Column: > 2 classification values?
N
Y
311
For all remaining class values $C_j$ in $G_i$
undo grouping
Y
312
Calculate correlation between $C_j$ and each column
Difference > θ?
N
318
Add $C_j$ to column with which $C_j$ matches best
314
Evaluate difference between columns (sub-groups)
316

Fig 3

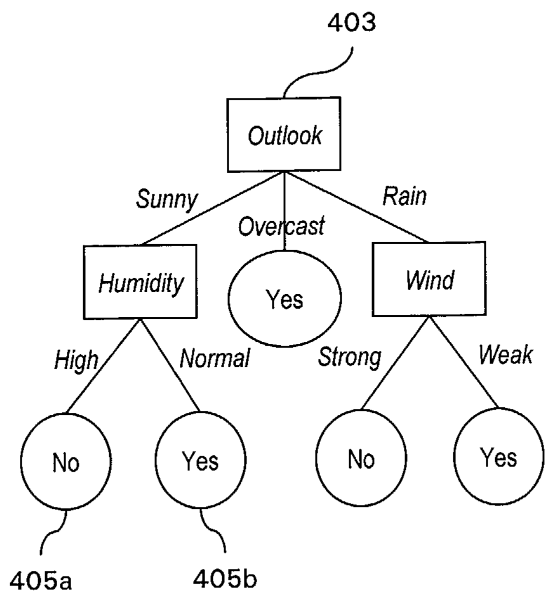
403
Outlook
Sunny
Overcast
Rain
Humidity
Yes
Wind
High
Normal
Strong
Weak
No
Yes
No
Yes
405a
405b

Fig 4a

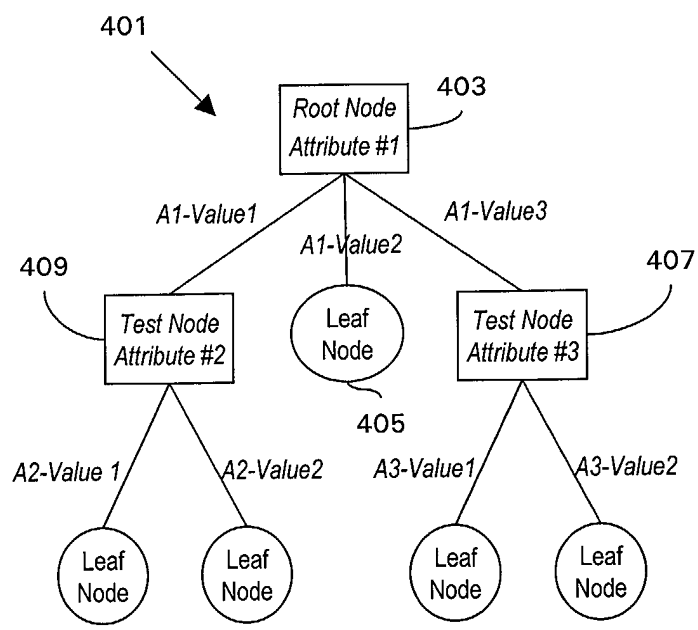
401
Root Node
Attribute #1
403
A1-Value1
A1-Value2
A1-Value3
409
407
Test Node
Attribute #2
Leaf
Node
Test Node
Attribute #3
405
A2-Value 1
A2-Value2
A3-Value1
A3-Value2
Leaf
Node
Leaf
Node
Leaf
Node
Leaf
Node

Fig 4b

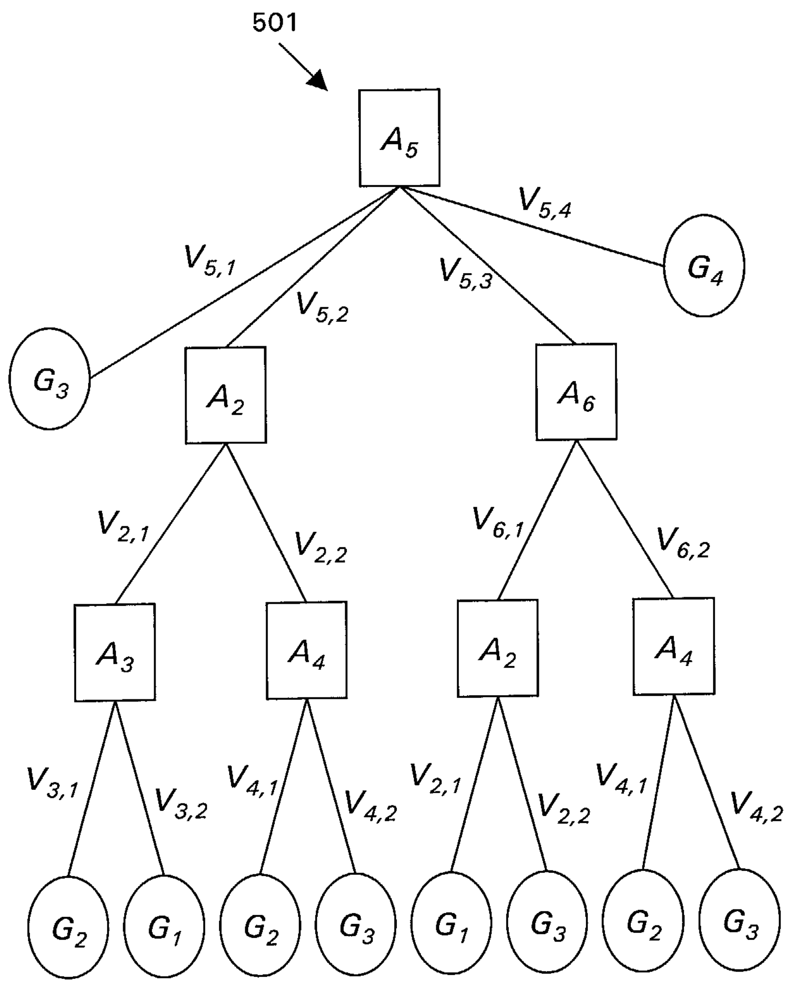
501
$A_5$
$V_{5,1}$
$V_{5,2}$
$V_{5,3}$
$V_{5,4}$
$G_3$
$A_2$
$A_6$
$G_4$
$V_{2,1}$
$V_{2,2}$
$V_{6,1}$
$V_{6,2}$
$A_3$
$A_4$
$A_2$
$A_4$
$V_{3,1}$
$V_{3,2}$
$V_{4,1}$
$V_{4,2}$
$V_{2,1}$
$V_{2,2}$
$V_{4,1}$
$V_{4,2}$
$G_2$
$G_1$
$G_2$
$G_3$
$G_1$
$G_3$
$G_2$
$G_3$

Fig 5a

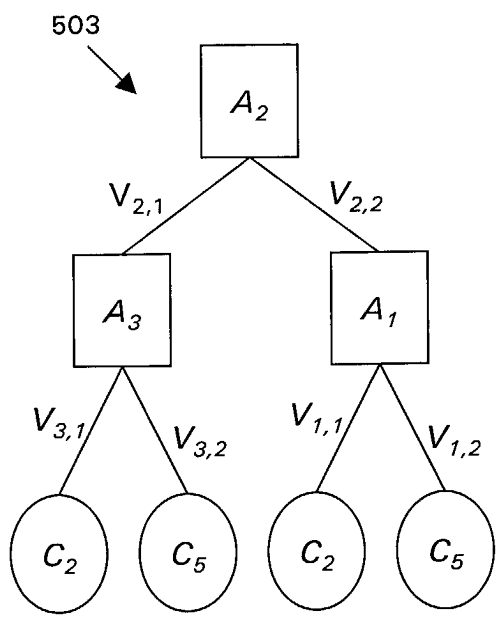


**Fig 5b**

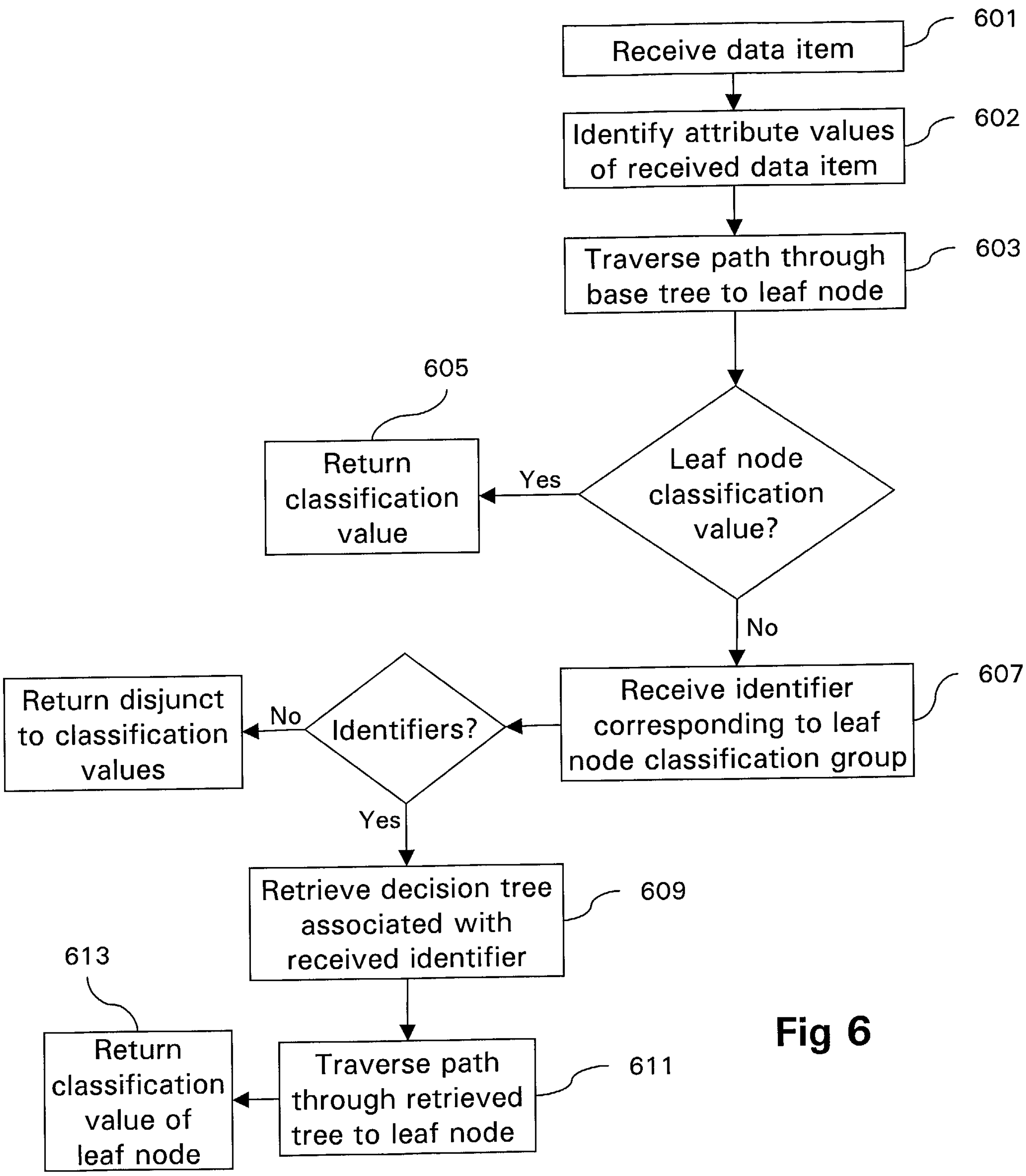
601
Receive data item
602
Identify attribute values of received data item
603
Traverse path through base tree to leaf node
605
Return classification value
Yes
Leaf node classification value?
No
607
Receive identifier corresponding to leaf node classification group
Return disjunct to classification values
No
Identifiers?
Yes
609
Retrieve decision tree associated with received identifier
613
Return classification value of leaf node
Traverse path through retrieved tree to leaf node
611

Fig 6

European Patent Office

# EUROPEAN SEARCH REPORT

Application Number
EP 02 25 2733

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | JIA J ET AL: "Improvement of decision tree generation by using instance-based learning and clustering method" SYSTEMS, MAN AND CYBERNETICS, 1996., IEEE INTERNATIONAL CONFERENCE ON BEIJING, CHINA 14-17 OCT. 1996, NEW YORK, NY, USA,IEEE, US, 14 October 1996 (1996-10-14), pages 696-701, XP010206711 ISBN: 0-7803-3280-6 * page 697, column 1, last two paragraphs* * page 697, column 2 * * page 698, column 1, paragraph 1 * * page 698, column 2, last paragraph * * page 699, column 1, paragraph 1,2 * --- | 1-10 | G06F17/30 |
| A,D | TREVOR HASTIE, ROBERT TIBSHIRANI: "Classification by pairwise coupling" ADVANCES IN NEURAL INFORMATION PROCESSING SYSTEMS, vol. 10, 1998, XP002236002 * page 2 - page 3 * * page 5 - page 9 * * page 13, last paragraph * * page 14, first paragraph * --- | 1-10 | TECHNICAL FIELDS SEARCHED (Int.Cl.7) G06F |
| A,D | QUINLAN J R: "INDUCTION OF DECISION TREES" MACHINE LEARNING, KLUWER ACADEMIC PUBLISHERS, DORDRECHT, NL, vol. 1, no. 1, 1986, pages 81-106, XP000670767 * page 85 - page 91 * --- -/-- | 1,2,7,8 | |

The present search report has been drawn up for all claims

| Place of search | Date of completion of the search | Examiner |
|---|---|---|
| THE HAGUE | 25 March 2003 | Díaz de Lezana, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

European Patent Office

# EUROPEAN SEARCH REPORT

Application Number
EP 02 25 2733

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | CHRISTIAN BORGELT: "A Decision Tree Plug-In for DataEngine" PROC. 2ND DATA ANALYSIS SYMPOSIUM, 1998, XP002236003 Germany * the whole document * ----- | 1,2,7,8 | |

TECHNICAL FIELDS SEARCHED (Int.Cl.7)

The present search report has been drawn up for all claims

| Place of search | Date of completion of the search | Examiner |
|---|---|---|
| THE HAGUE | 25 March 2003 | Díaz de Lezana, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)